# EUROPEAN PATENT SPECIFICATION

(11) **EP 0 733 477 B1**
(45) Date of publication and mention of the grant of the patent: **18.09.2002**
(21) Application number: 96301948.4
(22) Date of filing: 21.03.1996
(51) Int. Cl.: B32B 31/12, B32B 31/20, B32B 5/28

(54) **Methods of forming materials for upholstery use**
Verfahren zum Formen von Materialien für Polsterteile
Procédés de formage de matériaux pour le rembourrage

(30) Priority: 24.03.1995 GB 9506097
(43) Date of publication of application: 25.09.1996
(73) Proprietor: WARDLE STOREYS LIMITED, Colne Lancashire BB8 6UT (GB)
(72) Inventor: Bundy, Robin Mitchell, North Yorks BD23 3QE (GB); Goodridge, Joanna, Lancashire BL3 2UE (GB)
(74) Representative: Knott, Stephen Gilbert

(56) References cited:
- EP-A- 0 572 104
- PATENT ABSTRACTS OF JAPAN vol. 014, no. 071 (M-0933), 9 February 1990 & JP 01 290421 A (TAKASE SENKOUJIYOU:KK), 22 November 1989, & DATABASE WPI Week 9002 Derwent Publications Ltd., London, GB; AN 90-010906 & JP 01 290 421 A (TAKASE SOME KOJYO) , 22 November 1989
- PATENT ABSTRACTS OF JAPAN vol. 017, no. 186 (M-1395), 12 April 1993 & JP 04 338535 A (CHISSO CORP), 25 November 1992,
- PATENT ABSTRACTS OF JAPAN vol. 016, no. 133 (C-0925), 6 April 1992 & JP 03 294586 A (NIPPON UEEBLOCK KK), 25 December 1991,
- PATENT ABSTRACTS OF JAPAN vol. 013, no. 538 (M-900), 30 November 1989 & JP 01 221235 A (KANTO LEATHER KK), 4 September 1989,

## Description

The invention relates to methods for forming materials for upholstery use.

Patent Abstracts of Japan Vol. 014 No. 071 (M-0933) 9 February 1990 discloses a face fabric glued to a urethane foamsheet, with a back fabric also being glued to the sheet. The structure is processed with an embossing roller under pressure and heat to provide a pattern on the face of the structure.

According to the invention, there is provided a method of forming a material for upholstery use comprising providing a sheet of a knitted fabric and a sheet of a plastics material, backing the knitted fabric with the plastics material to form a composite having a fabric surface and a plastics surface, heating the composite and then embossing a surface effect on the fabric surface, characterized in that the backing, heating and embossing are in a continuous process and the embossing step being such that the plastics material flows into the fabric so that the surface effect is formed at least partially by the plastics material.

The following is a more detailed description of an embodiment of the invention, by way of example, reference being made to the accompanying drawings in which:
Figure 1 is a schematic view of a laminator, and
Figure 2 is a schematic view of an embossing machine.

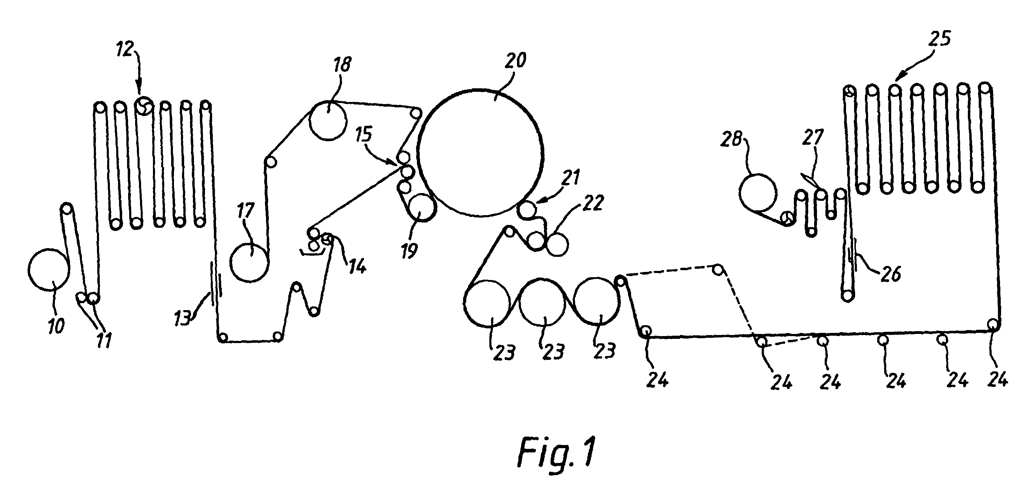

Referring first to Figure 1, the laminator comprises a roll 10 holding a sheet of a plastics material foamed or non-foamed. Suitable plastics materials are, for example, PVC, polyurethane, ABS. The sheet is drawn from the roll 10 by a pair of draw rollers 11 which feed the sheet to eleven rollers 12 which form an accumulator that holds a supply of plastics sheet to facilitate running changes on the laminator. A typical speed for the sheet might be 8-15m/min. The eleven rollers 12 are arranged in an upper line of six and a lower line of five with a spacing between the two lines and with the sheet passing successively from a roller of the upper line to a roller of the lower line and to a roller of the upper line and so on. The spacing between the lines of rollers is variable to provide a store for the sheet of variable capacity to accommodate variations in the sheet requirement of the laminator.

From the accumulator, the sheet passes via an automatic guide 13 to a paste applicator 14 where an adhesive paste is applied to one surface of the sheet. The plastics sheet then passes through three carrying rollers 15 which are able to expand when laminating highly extensible fabrics. At this assembly 15, the plastics sheet meets a knitted fabric sheet carried on a roll 17 and led from the roll via a pre-heat drum 18 to the lay-on roller assembly 15. The fabric can be made, for example, from polyester or polyamide and can be a weft-knit or a warp-knit.

The knitted fabric sheet passes with the plastics sheet through the carrying rollers 15, then around two lay-on/nip rollers 19 before passing around the outer surface of a heated rotatable drum 20. The temperature of the pre-heat drum 18 and of the heated drum 20 are such as to laminate the plastics sheet and the knitted fabric sheet together to form a composite sheet. A typical temperature for the drum might be 120°C to 150°C. As the laminate leaves the heated drum 20, it passes round two TEFLON coated rollers 21. These rollers 22 may have a temperature of from 150°C to 180°C. The laminate then passes through an embossing unit 22 incorporating a water cooled roller (engraved or smooth) and a rubber backing bole. The composite is then drawn down to three water cooled drums 23. From the cooling drums 23, the laminate is passed via carrying rollers 24 to a second accumulator 25 formed by thirteen rollers arranged in an upper line of seven and a lower line of six with the two lines being spaced apart and the laminate travelling successively from a roller of the upper line to a roller of the lower line to a roller of the upper line and so on. The spacing of the lines of rollers is variable to provide a store for the laminate of variable capacity to accommodate variations in the sheet requirement of the laminator. From the accumulator 25, the laminate passes through a second automatic guide 26 and a cutter unit 27 to wind-up roll 28. The cutter unit 27 edge-trims the laminate continuously and, when the wind-up roll 28 is full, the laminate is accumulated on the accumulator 25 until a new roll is fitted.

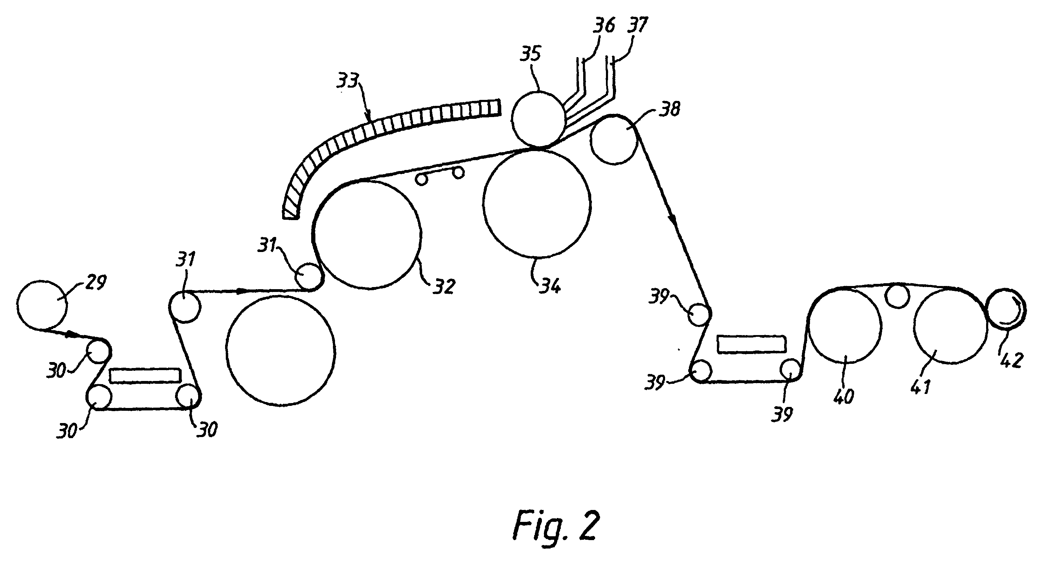

The roll of laminate is then passed to the embossing machine shown in Figure 2.

Referring next to Figure 2, the embosser comprises a roll 29 holding a sheet of laminate from the laminator described above with reference to Figure 1. The laminate is led via a guide roller 30 to two carrying rollers 31 and then to a heated drum 32 where the plastics surface of the laminate is heated by passage around the drum 32. A typical speed for the laminate might be 4-9m/min.

The heated sheet then passes under a radiant heater 33 where radiant heat is applied to the fabric side of the laminate. After this, the heated laminate passes between a rubber coated bole 34 and an embossing roller 35. The embossing roller 35 has a pattern which is the reverse of the pattern to be applied to the laminate. The laminate is disposed such that the plastics surface of the laminate contacts the rubber-coated drum 34 and the fabric surface contacts the embossing roller 35.

The heating of the laminate sheet and the force between the embossing roller 35 and the rubber-coated drum 34 are such that the plastics material is forced into the fabric and is shaped by the embossing roller. Thus the plastics material and the fabric are formed together on the fabric surface into the pattern of the embossing roller 35.

The embossing roller is water cooled via pipes 36,37. The embossed laminate then passes round a first cooling drum 38 and is guided by carrying rollers 39 to a pair of main cooling drums 40,41. The cooling drums 40,41 have cool water fed to their interiors and the embossed laminate passes over the surfaces of the drums 40,41 before being wound up on a wind-up roll 42.

On cooling, the embossed pattern produced by the embossing roller sets into the laminate. The pattern is held principally by the plastics material which has penetrated into the fabric and which thus holds the fabric also in the pattern. Plainly, a wide variety of embossing effects can be achieved depending not only on the pattern on the embossing roller 36 but also the weave and texture and material of the fabric in the laminate and the colour and characteristics of the plastics material.

In the embosser, the running speed and temperature settings, particularly the temperature setting of the radiant heater 34, must be closely monitored to ensure desired grain stability and depth on fabric.

It will be appreciated that the laminator and the embosser described above are only an example of the method according to the invention.

## Claims

1. A method of forming a material for upholstery use comprising providing a sheet of a knitted fabric and a sheet of a plastics material, backing the knitted fabric with the plastics material to form a composite having a fabric surface and a plastics surface, heating the composite and then embossing a surface effect on the fabric surface, **characterized in that** the backing, heating and embossing are in a continuous process and the embossing step being such that the plastics material flows into the fabric so that the surface effect is formed at least partially by the plastics material.

2. A method according to claim 1 and wherein the heating prior to said embossing step comprises heating the plastics surface.

3. A method according to claim 2 wherein the plastics surface is heated to a temperature of 150°C.

4. A method according to any one of claims 1 to 3 wherein the fabric surface is heated prior to embossing.

5. A method according to any one of claims 1 to 4 wherein the embossing step is performed by a roller contacting the fabric surface and carrying the surface effect.

6. A method according to any one of claims 1 to 5 wherein the plastics material is applied to the fabric sheet in the form of a sheet or a coating composition.

7. A method according to claim 6 wherein the plastics material is in the form of a sheet and is applied to the fabric sheet by lamination.

8. An upholstery material obtainable by the method of any one of claims 1 to 7.

## Patentansprüche

1. Verfahren zum Erzeugen eines Materials zum Einsatz als Polster, das das Bereitstellen einer Bahn aus einem Gewirke und einer Bahn aus einem Kunststoffmaterial, das Kaschieren des Gewirkes mit dem Kunststoffmaterial, um einen Verbundstoff mit einer Gewirkeoberfläche und einer Kunststoffoberfläche herzustellen, das Erhitzen des Verbundstoffs und das anschließende Prägen eines Oberflächeneffekts auf die Gewirkeoberfläche umfasst, **dadurch gekennzeichnet, dass** das Kaschieren, Erhitzen und Prägen in einem kontinuierlichen Prozess stattfinden und dass bei dem Schritt des Prägens das Kunststoffmaterial so in das Gewirke fließt, dass der Oberflächeneffekt wenigstens teilweise durch das Kunststoffrnaterial erzeugt wird.

2. Verfahren nach Anspruch 1, wobei das Erhitzen vor dem Schritt des Prägens das Erhitzen der Kunststoffoberfläche umfasst.

3. Verfahren nach Anspruch 2, wobei die Kunststoffoberfläche auf eine Temperatur von 150°C erhitzt wird.

4. Verfahren nach einem der Ansprüche 1 bis 3, wobei die Gewirkeoberfläche vor dem Prägen erhitzt wird.

5. Verfahren nach einem der Ansprüche 1 bis 4, wobei der Schritt des Prägens mit einer Walze ausgeführt wird, die mit der Gewirkeoberfläche in Kontakt kommt und den Oberflächeneffekt trägt.

6. Verfahren nach einem der Ansprüche 1 bis 5, wobei das Kunststoffmaterial in Form einer Bahn oder einer Beschichtungszusammensetzung auf die Gewirkebahn aufgetragen wird.

7. Verfahren nach Anspruch 5, wobei das Kunststoffmaterial in Form einer Bahn vorliegt und durch Laminieren auf die Gewirkebahn aufgetragen wird.

8. Polstermaterial, das mit dem Verfahren nach einem der Ansprüche 1 bis 7 hergestellt werden kann.

## Revendications

1. Procédé de formation d'un matériau d'ameublement, comprenant la disposition d'une feuille d'étoffe tricotée et d'une feuille de matière plastique, le doublage de l'étoffe tricotée par la matière plastique pour la formation d'une feuille composite ayant une surface d'étoffe et une surface de matière plastique, le chauffage de la feuille composite puis le gaufrage d'un effet de surface à la surface de l'étoffe, **caractérisé en ce que** le doublage, le chauffage et le gaufrage sont réalisés suivant un procédé continu, et l'étape de gaufrage est telle que la matière plastique s'écoule dans l'étoffé afin que l'effet de surface soit formé au moins partiellement par la matière plastique.

2. Procédé selon la revendication 1, dans lequel le chauffage antérieur à l'étape de gaufrage comprend le chauffage de la surface de matière plastique.

3. Procédé selon la revendication 2, dans lequel la surface de la matière plastique est chauffée à une température de 150 °C.

4. Procédé selon l'une quelconque des revendications 1 à 3, dans lequel la surface de l'étoffe est chauffée avant le gaufrage.

5. Procédé selon l'une quelconque des revendications 1 à 4, dans lequel l'étape de gaufrage est réalisée par un rouleau qui est au contact de la surface de l'étoffe et qui donne l'effet de surface.

6. Procédé selon l'une quelconque des revendications 1 à 5, dans lequel la matière plastique est appliquée à la feuille d'étoffe sous forme d'une feuille ou d'une composition de revêtement.

7. Procédé selon la revendication 6, dans lequel la matière plastique est sous forme d'une feuille et est appliquée par stratification à la feuille d'étoffe.

8. Matériau d'ameublement, qui peut être obtenu par mise en oeuvre du procédé selon l'une quelconque des revendications 1 à 7.
